# EUROPEAN PATENT APPLICATION

(11) **EP 1 031 440 A2**
(43) Date of publication of application: **30.08.2000**
(21) Application number: 00103119.4
(22) Date of filing: 16.02.2000
(51) Int. Cl.: B60C 1/00, C08L 21/00, C08K 5/372

(54) **Tire with rubber sidewall containing recycled rubber**

(30) Priority: 23.02.1999 US 256659
(71) Applicant: THE GOODYEAR TIRE & RUBBER COMPANY, Akron, Ohio 44316-0001 (US)
(72) Inventor: Wideman, Lawson Gibson, Hudson, Ohio 44236 (US); Balogh, George Frank, North Canton, Ohio 44720 (US); Sandstrom, Paul Harry, Tallmadge, Ohio 44278 (US); McQuate, Raymond Dean, Wadsworth, Ohio 44281 (US); Bezilla, Bernard Matthew, Jr., Stow, Ohio 44224 (US)
(74) Representative: Leitz, Paul

(57) **Abstract**

A pneumatic rubber tire having a rubber sidewall composition containing recycled rubber, at least one additional rubber and tetrathiodipropionic acid.

## Description

### Field

This invention relates to a pneumatic rubber tire having a rubber sidewall composition. More specifically, the invention relates to such a tire having a rubber sidewall composition of a rubber blend containing recycled rubber.

### Background of the Invention

It is often desired to reclaim or recycle vulcanized rubber. The vulcanized rubber is generally in the form of a manufactured article such as a pneumatic tire, industrial conveyor or power transmissions belt, hose and the like. Scrap pneumatic tires are an especially large source of such vulcanized rubber.

The vulcanized rubber is conventionally broken down and reclaimed or recycled by various processes, or combination of processes, which may include physical breakdown, grinding, chemical breakdown, devulcanization and/or cryogenic grinding. If the vulcanized rubber contains wire or textile fiber reinforcement, then it is generally removed by various processes which might include a magnetic separation, air aspiration and/or air flotation step.

In this description, the terms "recycle" and "recycled rubber" are used somewhat interchangeably and relate to both vulcanized and devulcanized rubber which is more completely hereinafter described. It is important to appreciate that devulcanized recycle or recycled rubber (sometimes referred to as reclaim rubber) relates to rubber which had been vulcanized and ground and may be followed by being substantially or partially devulcanized.

The resultant ground recycle rubber is a polymeric material which has somewhat the appearance of unvulcanized rubber but has important differences and properties therefrom. First, it is a rubber which is composed of a mixture of polymer units of various and numerous constructions different from either unvulcanized or vulcanized rubber.

Secondly, the recycled rubber, unlike conventional unvulcanized rubber, is also a complex mixture of largely unknown polymer(s), of compounding ingredients, possibly bits of textile fiber, and the like.

It has been observed that, after adding sulfur and accelerator to recycle rubber, followed by its revulcanization, the resulting physical properties, such as tensile and elongation, are usually lower than the corresponding properties of the original vulcanized rubber from which it was derived. It has also sometimes been observed that exposed edges of bales or slabs of recycle rubber have tended to curl up, apparently a result of oxidation degradation which was probably due to a deficiency of antidegradants which would normally have been adequately present in unvulcanized, compounded rubber.

Pneumatic rubber tires conventionally have rubber sidewalls which may be subject to considerable flexing and scuffing.

Sidewalls of rubber tires may age somewhat prematurely as a result of (i) weathering due to atmospheric conditions, (ii) fatigue cracking due to continual flexing under operating conditions, and (iii) abrasion due to scuffing.

Rubber sidewall ageing due to weathering may be, for example, a result of exposure to ultraviolet light, ozone and high humidity. Antidegradants are conventionally mixed with the sidewall rubber to counteract such effects. Also, often low unsaturation rubbers such as halobutyl rubber and EPDMs are included in or mixed with the sidewall rubber for such purpose.

Fatigue cracking of the sidewall rubber is usually due to continual flexing of the tire sidewall as the tire is run under load at service conditions. Such cracking can first initiate and then can propagate, over time, sometimes to an extent that it penetrates deeper into the tire sidewall and, in some cases, may even penetrate the supporting carcass plies. Due to the severe requirements placed on the rubber for use in a sidewall of a tire and the above undesirable properties associated with use of recycled rubber, recycled rubber has not been considered practical for use in a sidewall.

### Summary of the Invention

The present invention relates to a pneumatic rubber tire having a rubber sidewall composition containing recycled rubber and at least one additional rubber.

### Detailed Description of the Invention

There is disclosed a pneumatic rubber tire having a rubber sidewall where said outer sidewall layer is a sulfur-cured rubber layer composition comprised of, (a) from 5 to 50 parts by weight of a recycled rubber which has an individual particle size no greater than 420 microns; (b) from 0.1 to 5 parts by weight per 100 parts by weight of recycle rubber of 3,3'-tetrathiodipropionic acid; and (c) 100 parts by weight of at least one additional rubber selected from the group consisting of at least one of natural and/or synthetic cis 1,4-polyisoprene rubber, cis 1,4-polybutadiene rubber, styrene/butadiene copolymer rubber, styrene/isoprene/butadiene terpolymer rubber EPDM, acrylonitrile-butadiene rubber and 3,4-polyisoprene rubber.

In accordance with a preferred embodiment, the pneumatic tire having a rubber sidewall, the outer layer is a sulfur-cured rubber composition comprised of 10 to 40 parts by weight of the recycled rubber and 0.36 to 5 parts by weight per 100 parts by weight of recycled rubber of 3,3'-tetrathiodipropionic acid.

The recycle rubber should have a particle size no greater than 420 microns (40 mesh). Any particles greater than this render it impractical for subsequent mixing with the unvulcanized rubber. Generally speaking, the individual particle size should have a particle size no greater than 250 microns (60 mesh) and preferably smaller than 177 microns (80 mesh). Preferably, the individual particle size ranges from 250 microns (60 mesh) to 74 microns (200 mesh).

The amount of tetrathiodipropionic acid is dependent on the amount of recycled rubber. Generally speaking, the amount of tetrathiodipropionic acid ranges from 0.10 to 5 parts by weight based on 100 parts by weight of recycled rubber. Preferably, the level of tetrathiodipropionic acid that is dispersed ranges from 0.36 to 5.0 phr.

The tetrathiodipropionic acid may be added neat, dispersed directly on a carrier, on the recycle rubber or be suspended or dissolved in a solvent and thereafter applied to the recycled rubber or carrier, with subsequent solvent-stripping. Representative examples of such solvents include acetone, chloroform, dichloromethane, carbon tetrachloride, hexane, heptane, cyclohexane, xylene, benzene, dichloroethylene, dioxane, diisopropyl ether, tetrahydrofuran and toluene. Preferably, the solvent is acetone.

Representative carriers include carbon black or silica.

The recycled rubber having dispersed therein or thereon the tetrathiodipropionic acid is interchangeably referred to herein as "treated recycled rubber." The treated recycled rubber is mixed with additional rubber for use in the sidewall. In the practice of this invention, the sidewall rubber composition is comprised of at least one rubber selected from cis 1,4-polyisoprene rubber, natural or synthetic, 3,4-polyisoprene rubber, styrene/butadiene copolymer rubbers, styrene/isoprene/butadiene terpolymer rubbers, EPDM, butyl rubber, halobutyl rubber and cis 1,4-polybutadiene rubber. Preferably it is comprised of a combination of natural rubber or cis 1,4-polyisoprene rubber and cis 1,4-polybutadiene rubbers.

It is readily understood by those having skill in the art that the rubber compositions of the sidewall would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical additions of carbon black may comprise 20 to 80 parts by weight per 100 parts by weight of diene rubber (phr), preferably 30 to 50 phr. Typical amounts of tackifier resins, if used, may comprise 0.5 to 10 phr, usually 1 to 5 phr. Typical amounts of processing aids may comprise 1 to 20 phr. Such processing aids can include, for example, aromatic, napthenic, and/or paraffinic processing oils. Silica, if used, may be used in an amount of 5 to 25 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide. The presence and relative amounts of the above additives are considered to be not an aspect of the present invention which is more primarily directed to the utilization of specified blends of rubbers in tire sidewalls as sulfur vulcanizable compositions.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, with a range of from 0.5 to 2.25 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators which the primary accelerator is generally used in the larger amount (0.5 to 2 phr), and a secondary accelerator which is generally used in smaller amounts (0.05-0.50 phr) in order to activate and to improve the properties of the vulcanizate. Combinations of these accelerators have been known to produce a synergistic effect on the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the utilization of specified blends of rubbers in tire sidewalls, particularly the inclusion of the trans polybutadiene in the sidewalls.

Sometimes, the combination of zinc oxide, fatty acid, sulfur and accelerator(s) may be collectively referred to as curatives.

Sometimes a combination of antioxidants, antiozonants and waxes may be collectively referred to as antidegradants.

The tire can be built, shaped, molded and cured by various methods which will be readily apparent to those having skill in such art.

The prepared tire of this invention is conventionally shaped and cured by methods known to those having skill in such art.

The invention may be better understood by reference to the following example in which the parts and percentages are by weight unless otherwise indicated.

### Example 1

Eight rubber formulations were prepared to compare and contrast the importance of the use of ground recycled rubber and ground recycle rubber in combination with tetrathiodipropionic acid. Each rubber formulation contained 35 parts by weight of natural rubber and 65 parts by weight of Budene® 1207. Budene® 1207 is a cis-polybutadiene rubber marketed by The Goodyear Tire & Rubber Company. Each rubber formulation also contained the same conventional amounts of processing oil, peptizer, fatty acids, antidegradants, waxes, zinc oxide, primary and secondary accelerators and sulfur. Each formulation differed by the additional ingredients listed in Table I. The rubber formulations were prepared in a two-stage Banbury™ mix. All parts and percentages are by weight unless otherwise stated. Samples 1-4 are Controls and Samples 5-8 represent the present invention.

Cure properties were determined using a Monsanto oscillating disc rheometer which was operated at a temperature of 150°C and 100 cycles per minute. A description of oscillating disc rheometers can be found in the Vanderbilt Rubber Handbook edited by Robert O. Ohm (Norwalk, Conn., R. T. Vanderbilt Company, Inc., 1990), pages 554-557. The use of this cure meter and standardized values read from the curve are specified in ASTM D-2084. A typical cure curve obtained on an oscillating disc rheometer is shown on page 555 of the 1990 edition of the Vanderbilt Rubber Handbook.

In such an oscillating disc rheometer, compounded rubber samples are subjected to an oscillating shearing action of constant amplitude. The torque of the oscillating disc embedded in the stock that is being tested that is required to oscillate the rotor at the vulcanization temperature is measured. The values obtained using this cure test are very significant since changes in the rubber or the compounding recipe are very readily detected. It is obvious that it is normally advantageous to have a fast cure rate.

The following Table I reports cure properties that were determined from cure curves that were obtained for the rubber stocks that were prepared. These properties include a torque minimum (Min. Torque), a torque maximum (Max. Torque), the difference between Max Torque and Min Torque (Delta Torque), Final Torque (Final Torque). In addition, there is provided the property value for each sample when cured for 6 minutes at 170°C and 19.5 minutes at 150°C.

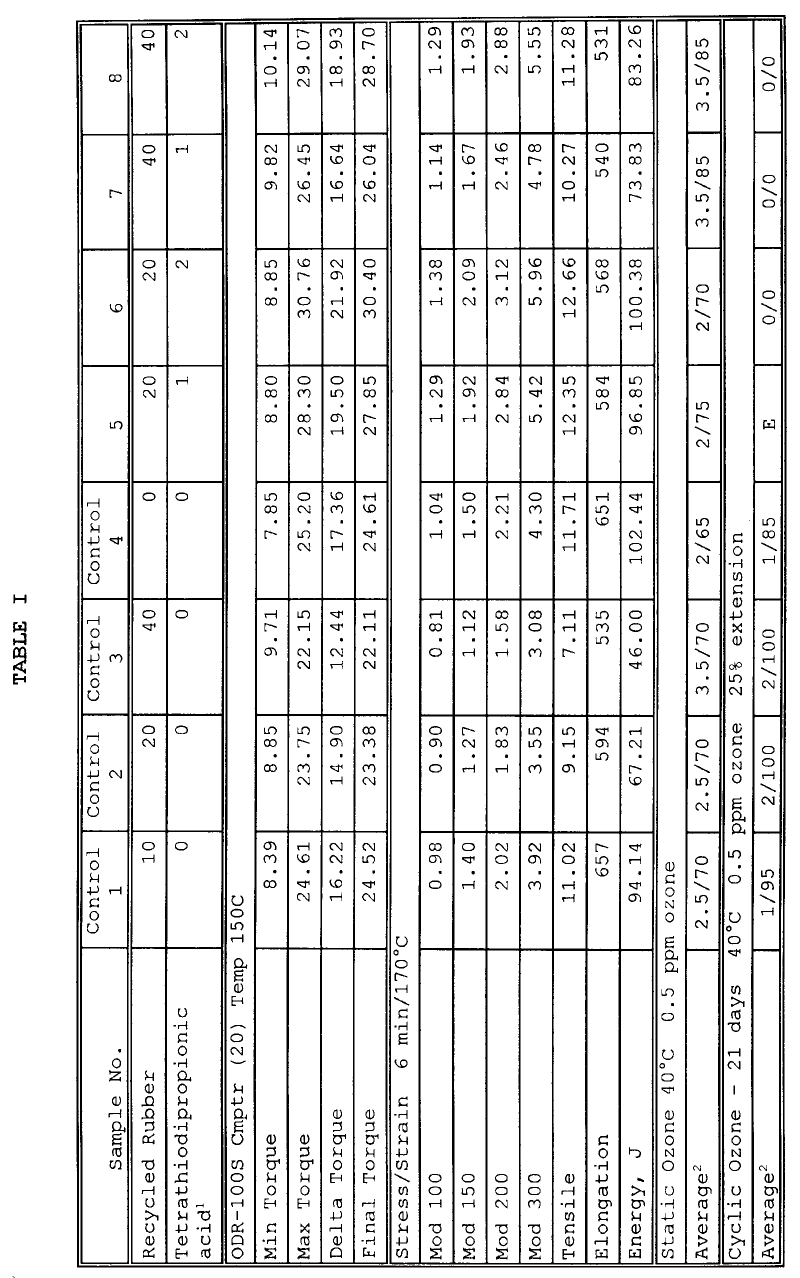

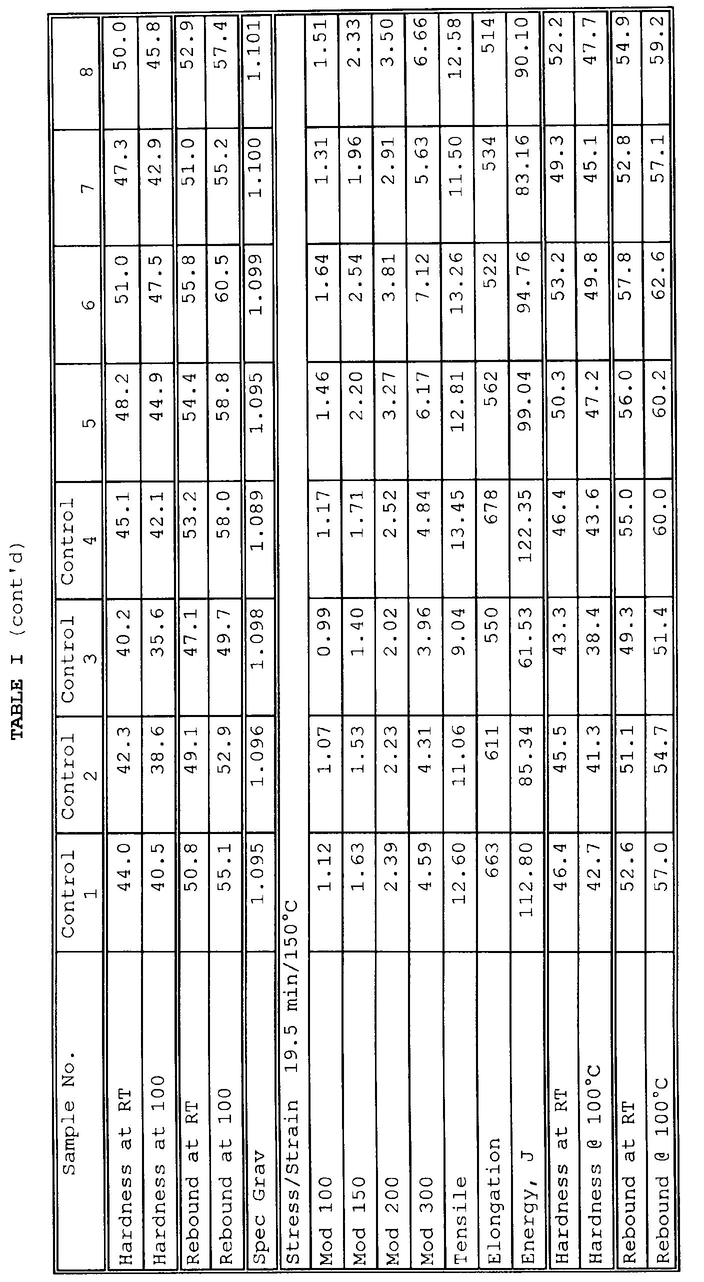

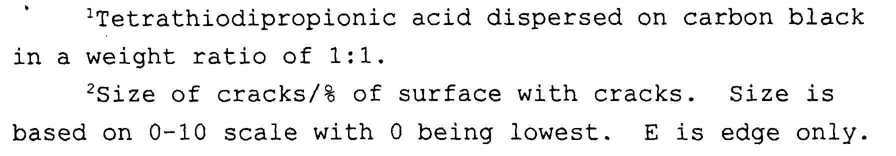

Controls 1 through 3 which contain varied levels of recycle rubber and no tetrasulfide show a directional decrease in state-of-cure (Delta Torque), loss in compound stiffness (Mod 300), loss in tensile strength, hardness and in rebound as the level of recycle rubber increases versus the Control 4 which contains no recycle or tetrasulfide, all of which were cured at ATS cure of 6 minutes at 170°C. Loss of these properties, such as state-of-cure, hardness and Mod 300 stiffness will give a tire without sufficient durability to be practical. Also, the loss in tensile strength and rebound will produce a tire with unacceptable hysteresis and heat buildup. Controls 5 and 6 with 20 parts of recycle rubber show a dramatic increase in state-of-cure (Delta Torque), stiffness (Mod 300), tensile strength, hardness and rebound when 1 or 2 parts of the supported tetrasulfide is present under the same cure conditions. Controls 5 and 6 show that any lost property of Control 4, as shown in Controls 1, 2 and 3, are readily retained plus increased values. Controls 7 and 8 with a higher level of recycle rubber show that 1 part of tetrasulfide cannot fully retain the properties of Control 4, but two parts of tetrasulfide in Control 8 gives practically the same values of Control 4 with no recycle rubber. ATS cure at 19.5 minutes at 150°C gives high modulus (stiffness) for all Controls 5 through 8 with tetrasulfide.

## Claims

1. A pneumatic rubber tire is provided having a rubber sidewall where said outer layer is a sulfur cured rubber composition characterized by of (a) from 5 to 50 parts by weight of a recycled rubber which has an individual particle size no greater than 420 microns, (b) from 0.1 to 5 parts by weight per 100 parts by weight of recycled rubber, of 3,3'-tetrathiodipropionic acid; and (c) 100 parts by weight of at least one additional rubber selected from the group consisting of natural rubber, synthetic cis 1,4-polyisoprene rubber, cis 1,4-polybutadiene rubber, styrene/butadiene copolymer rubber, styrene/isoprene/butadiene terpolymer rubber, EPDM, acrylonitrile-butadiene rubber and 3,4-polyisoprene rubber.

2. The pneumatic tire of claim 1 characterized in that said outer sidewall layer is comprised of from (a) 10 to 40 parts by weight of said recycled rubber and 0.36 to 5.0 parts by weight of 3,3'-tetrathiodipropionic acid.

3. The pneumatic tire of claim 1 characterized in that the 3,3'-tetrathiodipropionic acid is predispersed in the recycled rubber.

4. The pneumatic tire of claim 1 characterized in that the 3,3'-tetrathiodipropionic acid is predispersed on carbon black.

5. The pneumatic tire of claim 1 characterized in that the 3,3'-tetrathiodipropionic acid is added neat.

6. The pneumatic tire of claim 1 characterized in that the 3,3'-tetrathiodipropionic acid is dispersed in a solvent prior to being homogeneously dispersed in said recycled rubber with subsequent solvent-stripping.

7. The pneumatic tire of claim 6 characterized in that said solvent is selected from the group consisting of acetone, chloroform, dichloromethane, carbon tetrachloride, hexane, heptane, cyclohexane, xylene, benzene, dichloroethylene, dioxane, diisopropyl ether, tetrahydrofuran and toluene.

8. The pneumatic tire of claim 6 characterized in that said solvent is acetone.

9. The pneumatic tire of claim 1 characterized in that the particle size is no greater than 250 microns.

10. The pneumatic tire of claim 1 characterized in that the particle size ranges from 250 microns to 74 microns.
